(19) Europäisches Patentamt
European Patent Office
Office européen des brevets

(11) **EP 3 153 817 B1**

(12) **EUROPÄISCHE PATENTSCHRIFT**

(45) Veröffentlichungstag und Bekanntmachung des Hinweises auf die Patenterteilung:
**01.08.2018   Patentblatt 2018/31**

(51) Int Cl.:
**G01C 19/5726** *(2012.01)*    **G01C 19/5776** *(2012.01)*

(21) Anmeldenummer: **16192579.7**

(22) Anmeldetag: **06.10.2016**

(54) **SCHALTUNGSANORDNUNG UND VERFAHREN ZUR DIGITALEN KORREKTUR VON MODULATIONSEFFEKTEN BEI ELEKTROMECHANISCHEN DELTA-SIGMA-MODULATOREN**

CIRCUIT ASSEMBLY AND METHOD FOR DIGITALLY CORRECTING MODULATION EFFECTS IN ELECTROMECHANICAL DELTA SIGMA MODULATORS

CIRCUIT ÉLECTRONIQUE ET PROCÉDÉ DE CORRECTION NUMÉRIQUE D'EFFETS DE MODULATION POUR DES MODULATEURS SIGMA-DELTA ÉLECTROMÉCANIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.10.2015   DE 102015219458**

(43) Veröffentlichungstag der Anmeldung:
**12.04.2017   Patentblatt 2017/15**

(73) Patentinhaber: **Albert-Ludwigs-Universität Freiburg**
**79098 Freiburg (DE)**

(72) Erfinder:
• **MAURER, Michael**
**79365 Rheinhausen (DE)**
• **MANOLI, Yiannos**
**79104 Freiburg (DE)**

(74) Vertreter: **Grünecker Patent- und Rechtsanwälte PartG mbB**
**Leopoldstraße 4**
**80802 München (DE)**

(56) Entgegenhaltungen:
DE-A1-102010 053 022    DE-A1-102011 005 745
US-A- 5 440 269    US-B2- 8 857 259

**Beschreibung**

Die vorliegende Erfindung bezieht sich auf eine Schaltungsanordnung zum Auslesen eines kapazitiven Drehratensensors mit mindestens einer primären Masse und mindestens einer sekundären Masse, die mit der primären Masse verbunden ist, wobei die primäre Masse im Betrieb zu einer Primärschwingung angeregt wird, und wobei die sekundäre Masse in einer Richtung quer zur Primärschwingung aus einer Ruhelage ausgelenkt wird, wenn der Drehratensensor um eine sensitive Achse rotiert. Weiterhin betrifft die vorliegende Erfindung ein zugehöriges Verfahren zum Betreiben und Auslesen eines solchen kapazitiven Drehratensensors.

Die vorliegende Erfindung bezieht sich auf Sensoren und insbesondere auf Inertialsensoren zum Messen einer Drehrate, d.h. einer Winkelgeschwindigkeit, aufgrund einer Coriolisbeschleunigung.

Mikromechanische Coriolis-Drehratensensoren (engl. Coriolis Vibratory Gyroscope, CVG) besitzen eine bewegliche mechanische Struktur, welche zu einer periodischen Schwingung angeregt wird. Diese periodische, durch Anregung erzeugte Schwingung wird auch als primäre Schwingung bezeichnet. Erfährt der Sensor eine Drehung um eine Achse senkrecht zu der Primärschwingung oder Primärbewegung, so führt die Bewegung der Primärschwingung zu einer Corioliskraft, die proportional zur Messgröße, d. h. der Winkelgeschwindigkeit, ist. Diese Achse wird als die sensitive Achse des Sensors bezeichnet. Durch die Corioliskraft wird eine zweite, zur Primärschwingung orthogonale Schwingung angeregt. Diese zweite, zur Primärschwingung orthogonale Schwingung wird auch als Sekundärschwingung oder Sekundärbewegung bezeichnet. Die Sekundärschwingung, die auch als Detektionsschwingung bezeichnet wird, kann durch verschiedene Messverfahren erfasst werden, wobei die erfasste Größe als Maß für die auf den Drehratensensor wirkende Drehrate dient. Um die Primärschwingung zu erzeugen, werden unter anderem thermische, piezoelektrische, elektrostatische und induktive Verfahren verwendet, welche in der Technik bekannt sind. Zu der Erfassung der Sekundärschwingung sind piezoelektrische, piezoresistive oder kapazitive Prinzipien Stand der Technik.

Drehratensensoren können auf verschiedene Art und Weise ausgeführt werden. Alle Drehratensensoren haben jedoch gemeinsam, dass sie eine Schwingeinrichtung umfassen, die durch eine Primäranregungseinrichtung in die Primärbewegung versetzbar ist und dass sie eine Sekundärerfassungseinrichtung haben, die eine Sekundärbewegung aufgrund einer auf den Drehratensensor wirkenden Drehrate messen kann. Bei nicht-entkoppelten Sensoren führt ein und dieselbe schwingende Masse sowohl die Primärbewegung als auch die Sekundärbewegung aus. Diese Schwingeinrichtung ist dann derart ausgestaltet, dass sie eine Masse umfasst, die sowohl in der x-Richtung als auch in der y-Richtung bewegbar aufgehängt wird. Ohne Einschränkung der Allgemeinheit wird angenommen, dass die x-Richtung die Richtung der Primärbewegung oder der Primärschwingung ist, und dass die y-Richtung die Richtung der Sekundärbewegung bzw. der Sekundärschwingung ist, und dass die Drehrate auf die Schwingeinrichtung in z- Richtung wirkt.

Die Schwingeinrichtung ist üblicherweise in einen Primärschwinger und einen Sekundärschwinger aufgeteilt. Der Primärschwinger führt eine Schwingung in Primärrichtung durch und ist so mit dem Sekundärschwinger gekoppelt, dass die Primärschwingung auf den Sekundärschwinger übertragen wird. Der Primärschwinger ist idealerweise derart an einem Substrat aufgehängt, dass er sich lediglich in Primärrichtung bewegen kann, nicht aber in Sekundärrichtung. Damit führt eine auf den Primärschwinger wirkende Corioliskraft aufgrund einer Drehrate nicht dazu, dass der Primärschwinger in Sekundärrichtung ausgelenkt wird, da dieser Bewegungsfreiheitsgrad aufgrund seiner Aufhängung für den Primärschwinger nicht existiert. Dagegen ist der Sekundärschwinger derart aufgehängt, dass er sich sowohl in Primärrichtung als auch in Sekundärrichtung bewegen kann. Die Sekundärbewegung führt dazu, dass sich der Sekundärschwinger in Sekundärrichtung bewegt, wobei diese Sekundärbewegung durch die Sekundärerfassungseinrichtung erfassbar ist. Vorzugsweise ist die Sekundärerfassungseinrichtung dabei so ausgebildet, dass sie die Primärbewegung nicht erfasst, die der Sekundärschwinger nur deswegen ausführt, um auf die Corioliskraft sensitiv zu sein. Die Verbindung zwischen den Primärschwinger und dem Sekundärschwinger ist ferner, um eine noch bessere Kopplung zu erreichen, derart ausgebildet, dass zwar die Primärschwingung von dem Primärschwinger auf den Sekundärschwinger übertragen wird, dass jedoch die Sekundärschwingung nicht auf den Primärschwinger zurück übertragen wird.

Drehratensensoren werden z. B. in Fahrerassistenzsystemen, bei der Fahrsicherheit ("Electronic Stability Control", ESC) und für Navigationssysteme verwendet. Dabei detektieren diese Sensoren Drehraten um eine definierte sensitive Achse basierend auf dem Coriolis-Effekt. Der Drehratensensor besteht wie oben ausgeführt aus zwei Massen, der primären sowie der sekundären. Um eine Drehrate mit Hilfe des Coriolis-Effekts detektieren zu können, muss die gesamte Masse in Bewegung versetzt werden. Die primäre Masse, in der die sekundäre Masse aufgehängt ist, wird in eine konstante Schwingung versetzt. Durch eine Rotation des Sensors um die sensitive Achse wird die sekundäre Masse orthogonal zur primären Achse gemäß der nachfolgenden Gleichung (1) ausgelenkt.

$$\vec{F}_c = -2m\vec{\Omega} \times \vec{v}_p \tag{1}$$

Dabei ist $F_c$ die Corioliskraft, m die Masse, $\Omega$ die Drehrate und $v_p$ die Geschwindigkeit der primären Masse.

Die sekundäre Masse ist dabei idealerweise mechanisch so aufgehängt, dass sie nur orthogonal zur primären Oszillation auslenken kann. Eine große Amplitude der Primärschwingung ist wünschenswert, um eine hohe Empfindlichkeit zu erreichen. Die Primärmasse wird hierbei üblicherweise resonant angeregt und die Amplitude der Schwingung mittels einer automatischen Verstärkungsregelung (Automatic Gain Control, AGC) geregelt, wie dies aus dem Artikel T. Northemann, M. Maurer, S. Rombach, A. Buhmann, Y. Manoli: "Drive and sense interface for gyroscopes based on bandpass sigma-delta modulators", Proc. IEEE Int. Circuits and Systems (ISCAS) Symp, pages 3264-3267, 2010, bekannt ist.

Bei Verwendung des Drehratensensors in einer elektromechanischen Delta-Sigma-Regelschleife dient das Rückkoppelsignal zum Rückstellen der Auslenkung der sekundären Masse und somit als direktes Maß für die auf die sekundäre Masse einwirkenden Kräfte, wie dies z. B. in der deutschen Patentschrift DE 10 2005 046 699 B4 gezeigt ist. Figur 1 zeigt ein vereinfachtes Blockschaltbild des Gesamtsystems bestehend aus einem Sensor, einer Regelschleife der Primärmasse, einem elektromechanischen Delta-Sigma-Modulator (nachfolgend auch abgekürzt als em$\Delta\Sigma$M) sowie der digitalen Signalverarbeitung bestehend aus Demodulation und Filterung. Die Vorteile der Verwendung einer Delta-Sigma-Regelschleife sind hierbei das in Form eines Bitstroms digital vorliegende Ausgangssignal sowie die aufgrund des Single-Bit-Aufbaus einfache Realisierbarkeit der Rückkopplung.

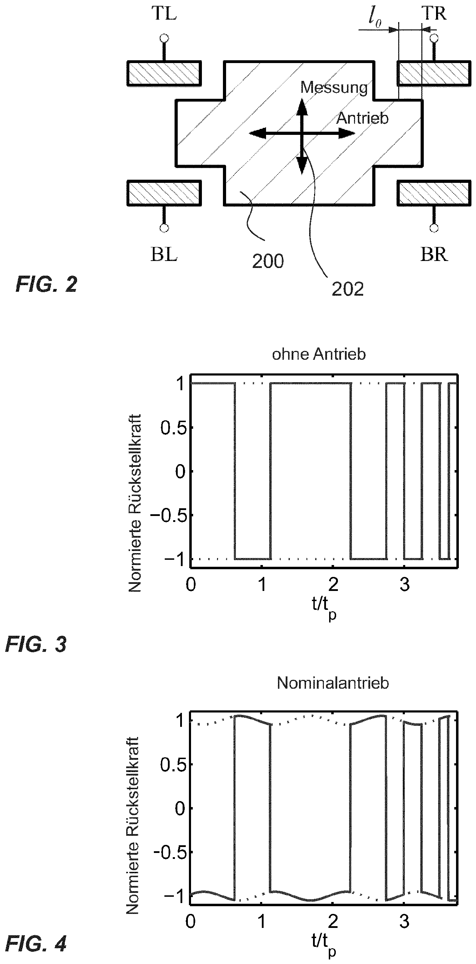

Figur 2 zeigt beispielhaft eine mögliche Anordnung der Rückkoppelelektroden an der Sekundärmasse 200 eines Drehratensensors. Feste Elektroden TL (oben links, engl. "top left"), TR (oben rechts, engl. "top right"), BL (unten links, engl. "bottom left") und BR (unten rechts, engl. "bottom right") erlauben eine kapazitive Detektion der Auslenkung der Sekundärmasse 200 in Messrichtung. Die überlappende Länge der Elektroden mit der sekundären Masse im Ruhezustand ist mit $l_0$ bezeichnet.

Um eine von der Primärschwingung möglichst unabhängige Kraftwirkung zu erzielen, werden üblicherweise die Elektroden mechanisch gleich ausgeführt, so dass aufgrund der Primärschwingung $x_p$ für die Kapazitäten beispielsweise die folgenden Gleichungen (2) und (3) gelten:

$$C_{TL} = C_{BL} = C_0 \frac{l_0 + x_p}{l_0} \qquad (2)$$

$$C_{TR} = C_{BR} = C_0 \frac{l_0 - x_p}{l_0} \qquad (3)$$

Dabei bedeutet $x_p$ die Momentanauslenkung durch die Primärschwingung, $C_0$ die Ausgangskapazität im Ruhezustand und $l_0$ die überlappende Länge der Elektroden und der sekundären Masse im Ruhezustand.

Um eine Rückstellkraft für die nach Gleichung (1) entstehende Corioliskraft zu erzeugen, werden Spannungen so an die Elektroden angelegt, dass eine elektrostatische Gegenkraft entlang der Richtung 202 der Erfassungsbewegung erzeugt wird.

Die elektrostatische Kraft $F_{el}$ an einer einzelnen Elektrode in der Erfassungsrichtung 202 ergibt sich nach den allgemein bekannten physikalischen Gesetzmäßigkeiten aus dem kapazitiven Energieinhalt $E_c$ zu:

$$F_{el} \;=\; \frac{d}{dx_s} E_C$$

$$F_{el} \;=\; \frac{d}{dx_s} {}^1\!/_2 \cdot C U^2$$

$$F_{el} \;=\; \frac{d}{dx_s} {}^1\!/_2 \cdot C \cdot \frac{d_0}{d_0 - x_s} U^2$$

$$F_{el} \;=\; {}^1\!/_2 \cdot C \cdot \frac{d_0}{(d_0 - x_s)^2} U^2$$

$$F_{el} \;\approx\; \frac{C \cdot U^2}{2 \cdot d_0}$$

Dabei kann die Momentanauslenkung $x_s$ der sekundären Masse in Erfassungsrichtung aufgrund der bei Systemen mit geschlossener Regelschleife typischen, im Vergleich zum Elektrodenabstand $d_o$ sehr kleinen Auslenkungen hier vernachlässigt werden.

Durch die unterschiedlichen Kraftrichtungen an den einzelnen Elektroden kann eine Rückstellkraft beispielsweise durch Anlegen der Elektrodenspannungen $U_{TL} = U_{TR} = U_{DC} + U_{FB}$ und $U_{BL} = U_{BR} = U_{DC} - U_{FB}$ erreicht werden. Die Rückstellkraft ergibt sich dann aufgrund der Kraftwirkung an den einzelnen Elektroden zu:

$$
\begin{aligned}
F_{ges} &= F_{TL} + F_{TR} - F_{BL} - F_{BR} \\
&= \frac{1}{2 \cdot d_0}\left[ C_{TL} \cdot (U_{DC} + U_{FB})^2 + C_{TR} \cdot (U_{DC} + U_{FB})^2 \dots \right. \\
&\qquad \left. \dots - C_{BL} \cdot (U_{DC} - U_{FB})^2 - C_{BR} \cdot (U_{DC} - U_{FB})^2 \right] \\
&= \frac{2}{d_0} \cdot C_{TL} \cdot U_{DC} \cdot U_{FB} + 2 \cdot C_{TR} \cdot U_{DC} \cdot U_{FB} \\
&= \frac{2}{d_0} \cdot C_0 \cdot U_{DC} \cdot U_{FB} \cdot \left( \frac{l_0 + x_p}{l_0} + \frac{l_0 - x_p}{l_0} \right) \\
&= \frac{2}{d_0} \cdot C_0 \cdot U_{DC} \cdot U_{FB} \cdot \frac{l_0 + x_p + l_0 - x_p}{l_0} \\
&= \frac{4}{d_0} \cdot C_0 \cdot U_{DC} \cdot U_{FB}
\end{aligned}
$$

Die benötigte Rückkoppelspannung $U_{FB}$ kann somit direkt als Maß für die auftretenden Corioliskräfte verwendet werden.

Produktionsungenauigkeiten können beispielsweise aufgrund von Schwankungen der Schichtdicke dazu führen, dass die Beziehungen (2) und (3) nicht genau erfüllt sind. Definiert man einen kapazitiven Abweichungsfaktor a, um den in Figur 2 die linksseitigen Kapazitäten größer und die rechtsseitigen Kapazitäten kleiner als der ideale Nennwert $C_0$ sind, sind analog zu den Gleichungen (2) und (3) die Kapazitäten in Abhängigkeit von der Momentanposition $x_p$ der Primärschwingung durch die nachfolgenden Gleichungen (4) und (5) gegeben:

$$
C_{TL} = C_{BL} = (1 + \alpha) \cdot C_0 \frac{l_0 + x_p}{l_0} \tag{4}
$$

$$
C_{TR} = C_{BR} = (1 - \alpha) \cdot C_0 \frac{l_0 - x_p}{l_0} \tag{5}
$$

Die resultierende Kraft $F_{ges,dr}$ die infolge der angelegten Rückkoppelspannung auf die sekundäre Masse wirkt, lässt sich daraus wie folgt berechnen:

$$
\begin{aligned}
F_{ges,dr} &= \frac{4}{d_0} \cdot C_0 \cdot U_{DC} \cdot U_{FB} + \alpha \cdot dF \\
dF &= \frac{2}{d_0} \cdot C_0 \cdot U_{DC} \cdot U_{FB} \cdot \left( \frac{l_0 + x_p}{l_0} - \frac{l_0 - x_p}{l_0} \right) \\
&= \frac{2}{d_0} \cdot C_0 \cdot U_{DC} \cdot U_{FB} \cdot \frac{l_0 + x_p - l_0 + x_p}{l_0} \\
&= \frac{4}{d_0} \cdot C_0 \cdot U_{DC} \cdot U_{FB} \frac{x_p}{l_0} \\
F_{ges,dr} &= \frac{4}{d_0} \cdot C_0 \cdot U_{DC} \cdot U_{FB} \cdot \left( 1 + \alpha \cdot \frac{x_p}{l_0} \right) = F_{ges} \cdot \left( 1 + \alpha \cdot \frac{x_p}{l_0} \right)
\end{aligned} \tag{6}
$$

Aufgrund der benötigten Sinusschwingung der Primärmasse ergibt sich somit, dass die tatsächlich anliegenden Rückstellkräfte von der Primärschwingung abhängen können. Vergleichbare Effekte können auch durch andere Produktionsschwankungen oder Ungenauigkeiten in der Sensorbewegung auftreten.

Idealerweise wäre der Betrag der Rückstellkräfte konstant und das Vorzeichen der einwirkenden Kraft nur vom Bitstrom des Delta-Sigma-Modulators abhängig wie dies in Figur 3 zu sehen ist. Aufgrund der Primärschwingung wird dieser Kraft jedoch nach Gleichung (6) ein von der Amplitude und Frequenz der Primärschwingung abhängiger Sinusterm überlagert. Dies ist der Figur 4 zu entnehmen, in der die Kraftwirkung bei nominaler Primärschwingung in nicht maßstäblicher, sondern überzeichneter Darstellung gezeigt ist.

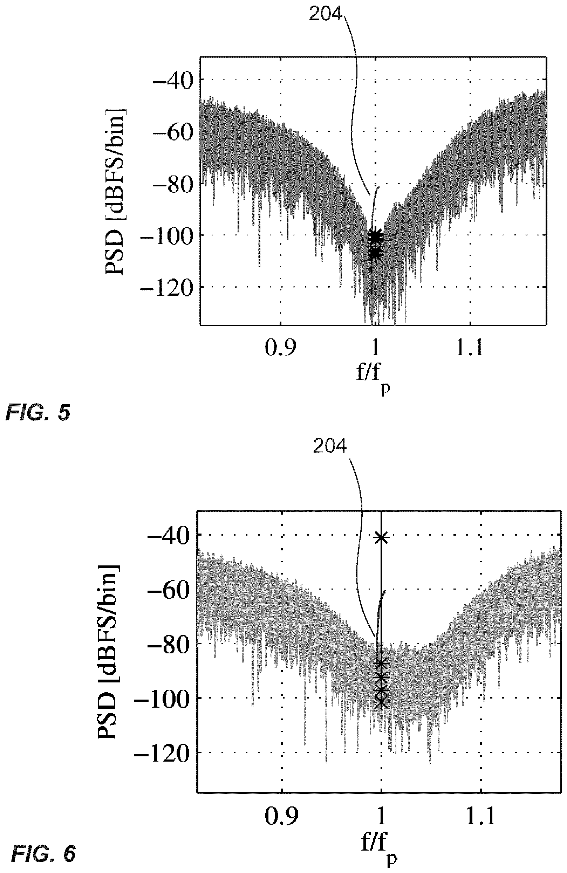

Diese überlagerte Schwingung führt aufgrund von Rauschfaltungseffekten dazu, dass sich das Rauschen im Signalband (engl. "Inband Noise", IBN) des Delta-Sigma-Modulators im Vergleich zu einem Betrieb mit ausgeschalteter Primärschwingung deutlich erhöht. Die Figuren 5 und 6 zeigen das jeweilige Spektrum (Leistungsdichtespektrum, power spectrum density, PSD) des Delta-Sigma-Bitstroms bei ausgeschalteter bzw. bei nominaler Primärschwingung. Die Kurven 204 stellen dabei jeweils das Rauschen im Signalband dar.

Ursache hierfür ist, dass durch die überlagerte Schwingung das hohe Quantisierungsrauschen des Delta-Sigma-Modulators bei DC bzw. $2 \cdot f_p$ (wobei $f_p$ die Frequenz der Primärschwingung ist) in das Signalband gefaltet wird.

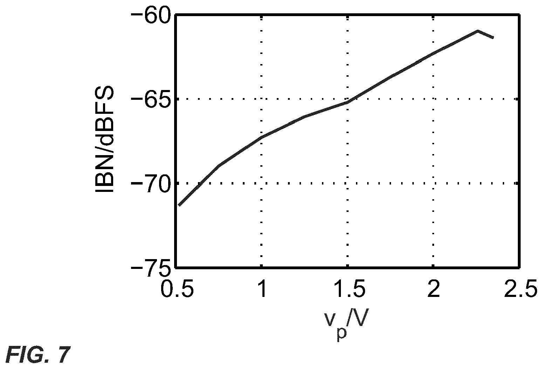

Figur 7 zeigt das gemessene Rauschen im Signalband in Abhängigkeit von der Primäramplitude. Es zeigt sich hier ein direkter Zusammenhang zwischen der am Ausgang des Ladungsintegrators gemessenen Primäramplitude $(v_p)$ und dem Rauschen im Signalband des em$\Delta\Sigma$M. Bei höheren Primäramplituden ergibt sich, wie nach Gleichung (6) zu erwarten, ein stärkerer Rauschfaltungseffekt aufgrund der nicht konstanten Rückkoppelkräfte, wodurch das Rauschen im Signalband ansteigt.

Ein zu dieser Problemstellung ähnlicher Effekt wird in dem Artikel Yufeng Dong, Michael Kraft, William Redman-White: "Force feedback linearization for higher-order electromechanical sigma-delta modulators", Journal of Micromechanics and Microengineering, 16(6):S54, 2006, beschrieben. Bei einer Ausleseschaltung für einen Beschleunigungssensor verändern sich hier die Größen der Rückkoppelkapazitäten aufgrund der Restbewegung der Sensormasse. Die Restbewegung der Sensormasse ist hierbei proportional zur vorliegenden Beschleunigung.

Bei Verwendung von konstanten Rückkoppelspannungspegeln führt dies dazu, dass höhere Harmonische des Signals im Spektrum sichtbar werden.

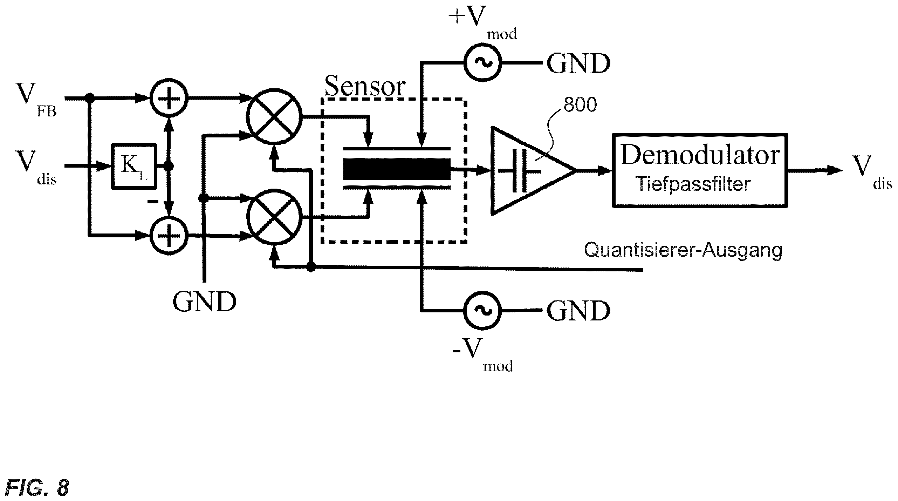

Um diesen Effekt zu beheben, wird gemäß der oben erwähnten Druckschrift Yufeng Dong, Michael Kraft, William Redman-White: "Force feedback linearization for higher-order electromechanical sigma-delta modulators", Journal of Micromechanics and Microengineering, 16(6):S54, 2006, eine Linearisierung der Rückkoppelkräfte durchgeführt. Hierzu wird, wie in Figur 8 gezeigt, die momentane Position der Sensormasse $V_{dis}$ unter Verwendung einer Pickoff-Schaltung, dem C/V-Converter 800, und analoger Tiefpassfilterung ermittelt. Die linear skalierte Auslenkung $V_{dis} \cdot K_L$ wird dann wiederum verwendet, um die angelegten Rückkoppelspannungen nachzustellen.

Durch diese Korrektur können bei richtigem Abgleich für $K_L$ näherungsweise konstante Rückkoppelkräfte erzielt werden, was zur Unterdrückung der höheren Harmonischen und damit zur Linearisierung des Systems führt.

Eine Adaption dieses bekannten Verfahrens zur Reduktion der Abhängigkeit der anliegenden Rückstellkräfte von der Primärschwingung wäre zwar möglich, würde aber eine aufwendige analoge Erzeugung der Hochvolt-Rückkoppelspannungen bedeuten. Darüber hinaus wäre für jedes Teilproblem eine Abgleichmöglichkeit im analogen Bereich notwendig, um eine konstante Rückkoppelkraft zu erreichen.

Somit ist neben einer höheren Komplexität der analogen Schaltungsteile auch ein erhöhter Leistungs- und Flächenverbrauch sowie eine aufwendigere Kalibrierung des Gesamtsystems zu erwarten.

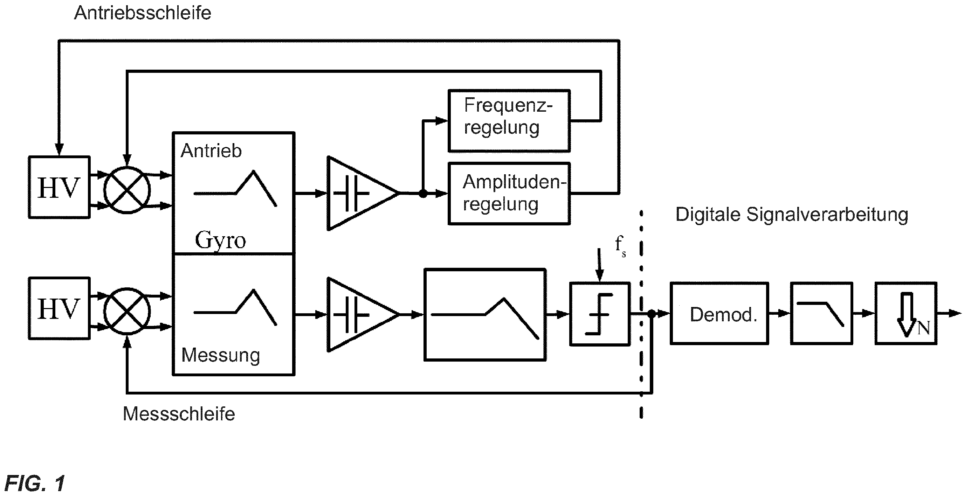

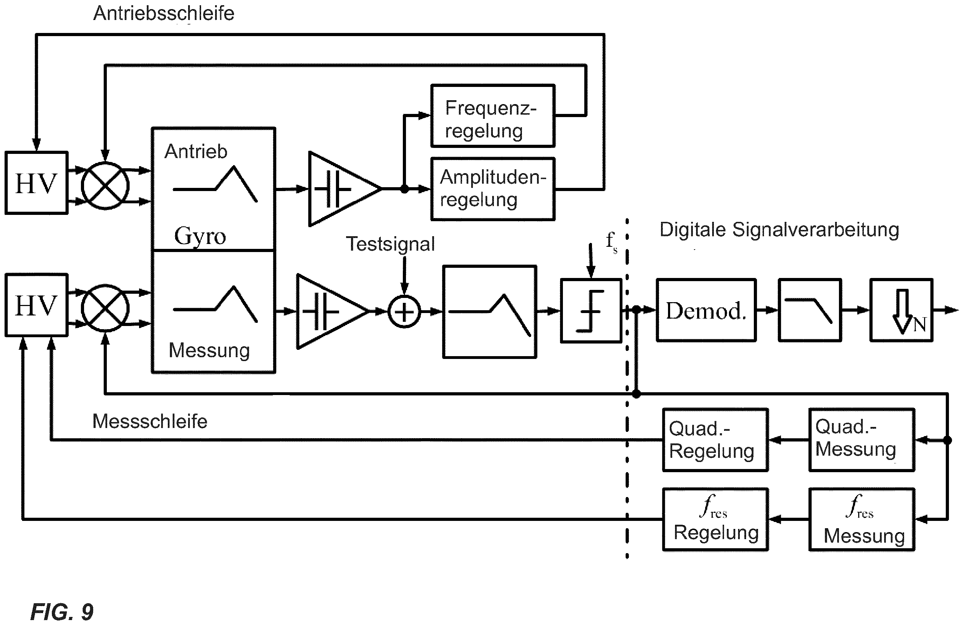

Weiterhin ist bekannt, Drehratensensoren zur Verbesserung der Systemparameter im sogenannten Mixed-Matched-Mode auszulesen. Dies bedeutet, dass die Resonanzfrequenzen des Primär- und Sekundärschwingers aufeinander abgeglichen werden. Hierzu wird üblicherweise der sogenannte Spring-Softening-Effekt genutzt, um die Resonanzfrequenz der Sekundärseite zu verschieben. Ein Beispiel für eine solche Ausleseschnittstelle ist in C. D. Ezekwe, B. E. BoserBoser: "A Mode-Matching Closed-Loop Vibratory-Gyroscope Readout Interface with a 0.004°/s/√Hz Noise Floor over a 50Hz Band", Proc. Digest of Technical Papers. IEEE International Solid-State Circuits Conference ISSCC 2008, S. 58 ff, gezeigt. Zum Aufbau einer Regelschleife werden typischerweise Testsignale eingespeist, um die aktuelle Lage der Sekundärresonanzfrequenz detektieren zu können. Zum Abgleich des Quadraturfehlers des Sensors kommt oft ebenfalls eine automatische Regelung zum Einsatz. Ein Blockschaltbild mit diesen Regelungen ist in Figur 9 gezeigt. Wie in dieser Figur dargestellt, ist die Anordnung der Figur 1 bei der Mixed-Matched-Mode-Auslesung um die Schaltungseinheiten für die Quadraturregelung und die Regelung der sekundären Resonanzfrequenz $f_{res}$ erweitert.

Eine entsprechende Einstellmöglichkeit für die Resonanzfrequenz und die Quadraturkompensation ist über die Rückkoppelelektroden des Sekundärschwingers gegeben, wie dies in Figur 2 gezeigt ist. Hierzu werden die Spannungen an den Kapazitäten um einen Quadraturterm $(U_{Quad})$ und einen Frequenzterm $(U_{Mode})$ erweitert. Es gilt:

$$U_{TL} = U_{Mode} + U_{Quad} + U_{FB} \tag{7}$$

$$U_{TR} = U_{Mode} - U_{Quad} + U_{FB} \tag{8}$$

$$U_{BL} = U_{Mode} - U_{Quad} - U_{FB} \tag{9}$$

$$U_{BR} = U_{Mode} + U_{Quad} - U_{FB} \tag{10}$$

Für die resultierenden Kräfte ergeben sich daraus die folgenden Proportionalitäten:

$$F_{FB} \propto U_{Mode} \cdot U_{FB} \tag{11}$$

$$F_{Quad} \propto U_{Mode} \cdot U_{Quad} \tag{12}$$

$$F_{mode} \propto U_{Mode}^2 + U_{Quad}^2 + U_{FB}^2 \tag{13}$$

Problematisch ist jedoch, dass sich die Regelspannung der Frequenzregelung auch auf die Rückstellkräfte auswirkt. Dies bewirkt bei größeren Änderungen von $U_{Mode}$, wie sie beispielsweise über einen großen Temperaturbereich nötig werden können, eine Veränderung des Skalenfaktors des Sensorsystems.

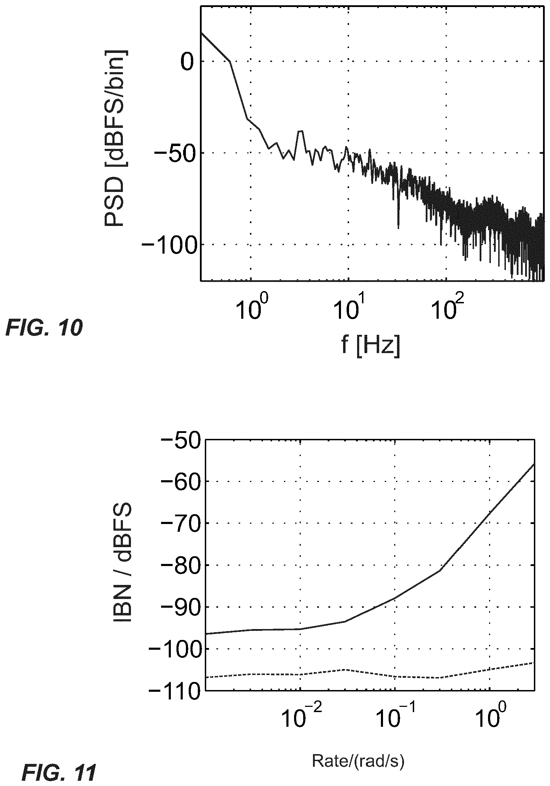

Da die Frequenzregelung nur sehr langsame Änderungen ausgleichen muss, enthält $U_{Mode}$ typischerweise vor allem Spektralkomponenten mit geringen Frequenzen. Dies ist in Figur 10 in Form eines beispielhaften Spektrums des Regelsignalssignals für die Frequenzregelung ($U_{Mode}$) dargestellt.

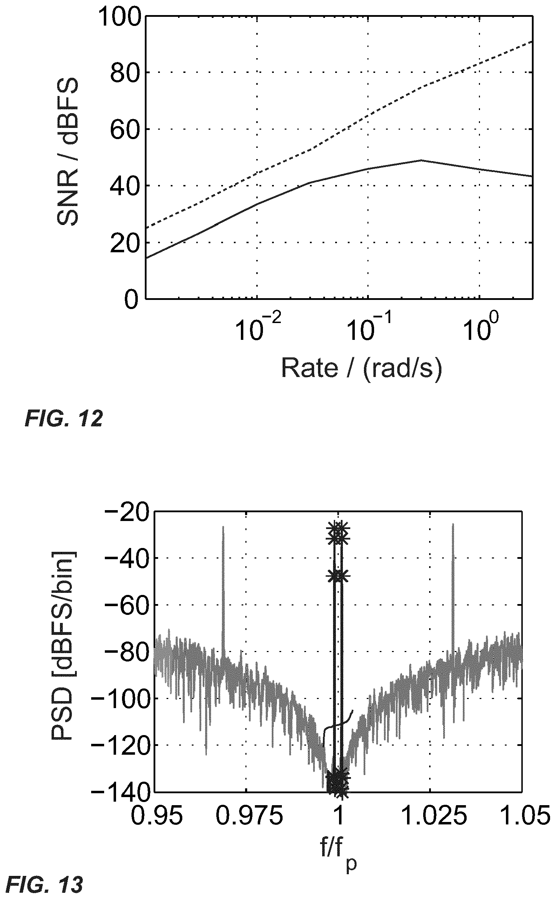

Eine Faltung des Quantisierungsrauschens ins Signalband findet in begrenztem Maße statt. Dies kann beispielsweise durch die Wahl der Regelparameter günstig beeinflusst werden. Die Figuren 11 und 12 zeigen allerdings, dass bei höheren Signalamplituden ein starker Anstieg des Rauschens im Signalband im Vergleich zu einem kalibrierten, aber ungeregelten System auftritt, was sich auch als Begrenzung im Signal-Rausch-Abstand (signal to noise ratio, SNR) zeigt. Dies wird durch eine Modulation des Regelspektrums mit den Signalkomponenten im em$\Delta\Sigma$M-Spektrum verursacht. Insbesondere zeigt Figur 11 das IBN und Figur 12 den Signal-Rausch-Abstand des kalibrierten (strichlierte Kurve) und des geregelten (durchgezogene Kurve) Bitstroms des Delta-Sigma-Modulators bei verschiedenen Drehraten.

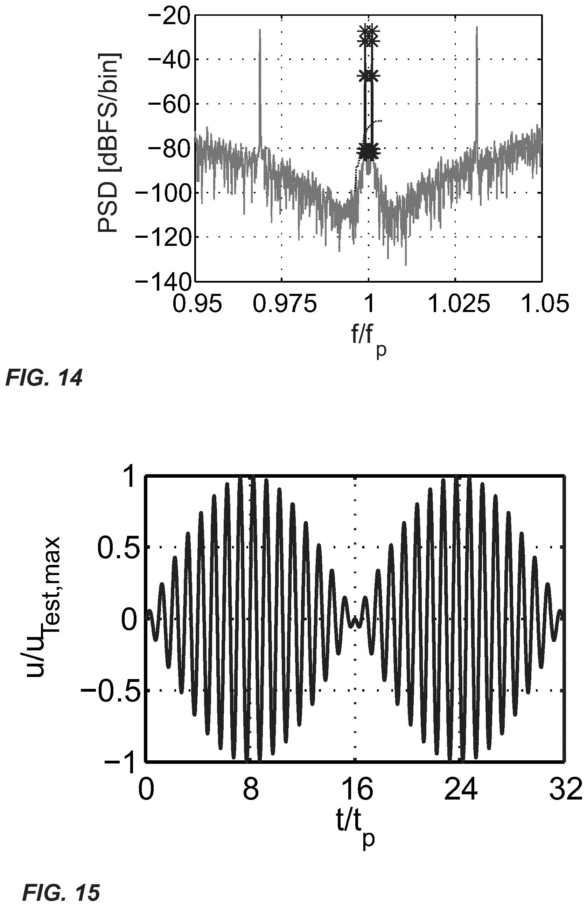

Figur 13 zeigt beispielhaft für eine hohe anliegende Drehrate das Auffüllen des Signalbands im Vergleich zum Spektrum eines kalibrierten, ungeregelten Systems, wie es in Figur 14 gezeigt ist. Dabei ist in Figur 13 das Spektrum des Bitstroms des Delta-Sigma-Modulators bei ausgeschalteter Frequenzregelung und in Figur 14 das Spektrum des Bitstroms des Delta-Sigma-Modulators bei eingeschalteter Frequenzregelung gezeigt.

Um eine Detektion der Resonanzfrequenz erreichen zu können, werden üblicherweise Testsignale ins System eingespeist. Hierbei kann ein Signal zum Einsatz kommen, dessen Spektralkomponenten, wie in Figur 15 gezeigt, symmetrisch um das Signalband angeordnet sind. Der Einsatz solcher Signale ist in dem Artikel C. D. Ezekwe, B. E. Boser: "A Mode-Matching Closed-Loop Vibratory-Gyroscope Readout Interface with a 0.004°/s/√Hz Noise Floor over a 50Hz Band", Proc. Digest of Technical Papers. IEEE International Solid-State Circuits Conference ISSCC 2008, S. 58 ff, und in der Offenlegungsschrift DE 10 2011 005 745 A1 beschrieben. Die Grundfrequenz entspricht dabei der Resonanzfrequenz der Primärmasse, die Frequenz der Einhüllenden entspricht dem Abstand der Testsignale zu dieser Frequenz und legt damit den Abstand zum Signalband fest.

In der DE 10 2011 005 745 A1 wird eine Möglichkeit aufgezeigt, wie dieses Problem behoben werden kann. Als Grundgedanke dient hierbei die Idee, dass die vier Spannungen am Sensor so eingestellt werden, dass die jeweils für Rückkopplung, Quadraturregelung und Frequenzregelung entstehenden Kräfte am Sensor jeweils linear von nur einem digitalen Wert *(FB, Quad, Mode)* abhängig sind und keine Querempfindlichkeiten zu den anderen Werten auftreten.

Dies wird dadurch erreicht, dass bei der Berechnung der in Figur 9 zu verwendenden Spannungen der quadratische Zusammenhang zwischen angelegter Spannung und erzeugter Kraft an einer Kapazität berücksichtigt wird. Um diesem quadratischen Zusammenhang entgegenzuwirken, ist es notwendig, beim Übergang von digitalem Steuerwert zur generierten Spannung eine Wurzelfunktion anzuwenden. Die vier Sensorspannungen werden daher nach folgenden Zusammenhängen erzeugt:

$$U_{TL} \;=\; \sqrt{Mode + Quad + FB} \qquad\qquad\qquad (14)$$

$$U_{TR} \;=\; \sqrt{Mode + Quad - FB} \qquad\qquad\qquad (15)$$

$$U_{BL} \;=\; \sqrt{Mode - Quad + FB} \qquad\qquad\qquad (16)$$

$$U_{BR} \;=\; \sqrt{Mode - Quad - FB} \qquad\qquad\qquad (17)$$

Durch die verwendeten Wurzelfunktionen kann erreicht werden, dass die erzeugten Rückstellkräfte für die Drehrate unabhängig von der Frequenz- und Quadraturregelung sind.

Das beschriebene Verfahren ist auf die Problemstellung beim Matched-Mode-Betrieb hin ausgerichtet. Eine zusätzliche Berücksichtigung von Einflüssen durch die Primärschwingung sollte dadurch möglich sein, dass der digitale Wert für die Rückkoppelkräfte (FB) korrigiert wird, um den in Gleichung (6) formulierten Effekt zu kompensieren.

Problematisch bei dieser Lösung ist jedoch zum Einen, dass die digital berechneten Werte für die Spannungen am Sensor möglichst genau analog generiert werden müssen. Fehleinstellungen der Spannungen führen wiederum zu Abhängigkeiten zwischen den verschiedenen Regelgrößen.

Das Hauptproblem ist allerdings, dass eine Neuberechnung aufgrund aktualisierter Reglerwerte dazu führen kann, dass sich die tatsächlich an den Sensor angelegte Feedback-Kraft stark verändert. Dies würde beispielsweise dadurch verursacht, dass aufgrund der endlichen Anzahl von Digital-Analog-Converter (DAC)-Levels nur für einen Teil der verwendeten DAC eine Anpassung der Spannungen nötig wird, während andere ihre Ausgangsspannung konstant halten. Somit besteht das Risiko, dass bei jeder Neuberechnung der Werte zusätzliches Rundungsrauschen in den Rückkoppelpfad eingespeist wird. Um diesen Effekt zu minimieren, sind daher hochauflösende DACs notwendig.

Aufgrund der erforderlichen Wurzelberechnungen sowie der notwendigen hochauflösenden DACs ist bei dieser Lösung außerdem mit einem hohen Leistungs- und Flächenverbrauch zu rechnen.

Die DE 10 2011 005 745 A1 bezieht sich auf ein Verfahren zur entkoppelten Regelung der Quadratur und der Resonanzfrequenz eines mikromechanischen Drehratensensors mittels Sigma-Delta-Modulation, und insbesondere auf ein Verfahren zum präzisen Messbetrieb eines mikromechanischen Drehratensensors, umfassend wenigstens eine seismische Masse, zumindest eine Antriebseinrichtung zum Antreiben der seismischen Masse in der Primärmode und mindestens drei Trimm-Elektrodenelemente, welche der seismischen Masse direkt oder indirekt gemeinsam zugeordnet sind. Jeweils zwischen den einzelnen dieser Trimm-Elektrodenelemente und der seismischen Masse wird eine elektrische Trimmspannung angelegt, wobei jede dieser elektrischen Trimmspannungen in Abhängigkeit einer Resonanzfrequenzstellgröße, einer Quadraturstellgröße und einer Rückstellgröße eingestellt werden.

Die US 8,847,259 B2 offenbart einen Leseschaltkreis für ein Gyroskop. Die Leseschaltung enthält eine Antriebseinheit, ein Hochpassfilter, eine Signalverarbeitungseinheit und ein Tiefpassfilter. Die Ansteuereinheit erzeugt ein Resonanzsignal für einen Resonator des Gyroskops und erzeugt ein Demodulationssignal für die Signalverarbeitungseinheit. Die Signalverarbeitungseinheit liefert ein Modulationssignal an einen Coriolis-Beschleunigungsmesser des Gyroskops. Ein Eingangsanschluss des Hochpassfilters empfängt ein Ausgangssignal des Coriolis-Beschleunigungsmessers. Die Signalverarbeitungseinheit verarbeitet und demoduliert einen Ausgang des Hochpassfilters gemäß dem Demodulationssignal und gibt ein Demodulationsergebnis an den Tiefpassfilter aus.

Die US 5,440,269 A auf einen digitalen Frequenzdemodulator, bei dem Daten, die das zu demodulierende Eingangssignal darstellen, in einer Look-up-Tabelle vorgespeichert werden, und die Signalverarbeitung digital durchgeführt wird, um eine Leseadresse zu erzeugen, die zum Auslesen der in der Look-up-Tabelle gespeicherten Daten unter Verwendung einer Phasenverschiebung erforderlich ist. Die Phasenverschiebung wird durchgeführt, indem die Steigung eines frequenzmodulierten Signals bestimmt wird, das ein Signal enthält, das die Nullachse nicht kreuzt. Somit wird die Genauigkeit der Frequenzdemodulation verbessert und die in der Look-up-Tabelle gespeicherten Frequenzdemodulationsdaten werden minimiert, um die Größe eines ROMs zu reduzieren, der für die Nachschlagtabelle verwendet wird. Der digitale Frequenzdemodulator enthält eine Look-up-Tabelle zum Speichern von Frequenzdemodulationsdaten, eine Adresserzeugungsschaltung zum Vergleichen der Größe des Absolutwerts des frequenzmodulierten Signals und eine phasenverschobene Version davon, um Adressinformationen für die Look-up-Tabelle und ein Vergleichssignal zu erzeugen. Weiterhin umfasst der FM-Demodulator eine Schaltung zum Bestimmen der Steigung der frequenzmodulierten und phasenverschobenen Signale und darauf ansprechendes Erzeugen von Steigungsbestimmungssignalen und einen Phasenkompensator zum Bearbeiten der Ausgabe der Look-up-Tabelle in Antwort auf die Steigungsbestimmungssignale und das Vergleichssignal, um dadurch den aus der Look-up-Tabelle ausgegebenen Phasenwert zu erweitern. Es wird auch ein Verfahren zum Betreiben eines digitalen Frequenzdemodulators aufgezeigt.

Die DE 10 2010 053 022 A1 bezieht sich auf eine Vorrichtung zur Messung einer Drehrate. Die Vorrichtung hat einen mechanischen Drehratensensor, der eine träge Masse aufweist, die mittels einer Anregungseinrichtung entlang einer Primärachse in eine Primärschwingung versetzbar und entlang einer quer zur Primärachse verlaufenden Sekundärachse derart auslenkbar ist, dass sie beim Auftreten einer Drehrate um eine quer zur Primärachse und quer zur Sekundärachse verlaufende sensitive Achse entlang der Sekundärachse eine durch die Coriolis-Kraft angeregte Sekundärschwingung durchführt. Zur Erfassung eines amplitudenmodulierten Sensorsignals für die Sekundärschwingung ist mindestens ein Sensorelement vorhanden. Ein Sigma-Delta-Modulator weist einen mit dem Sensorelement verbundenen Tiefpassfilter, einen Quantisierer und einen in einem Rückkopplungspfad angeordneten Sekundäraktor zum Aufbringen einer der Coriolis-Kraft entgegenwirkenden Kraft auf die Masse auf. Der Sekundäraktor ist derart über den Rückkopplungspfad mit dem Quantisierer verbunden, dass ein Rückkopplungssignal im zeitlichen Mittel die Auslenkung der Masse in Richtung der Sekundärschwingung kompensiert. Zum Verschieben des Frequenzbands des amplitudenmodulierten Sensorsignals in einen niedrigeren Frequenzbereich ist zwischen dem Sensorelement und dem Tiefpassfilter eine erste Modulationsstufe angeordnet. Zum Rückgängigmachen der Frequenzverschiebung ist im Rückkopplungspfad eine zweite Modulationsstufe angeordnet.

Die Aufgabe der vorliegenden Erfindung besteht darin, eine Schaltungsanordnung und ein Verfahren zum Korrigieren von Rauschfaltungseffekten anzugeben, um dadurch das Rauschen im Signalband zu reduzieren, wobei die Sensoranordnung gleichzeitig kostengünstig herstellbar, zuverlässig und platzsparend ist.

Diese Aufgabe wird durch den Gegenstand des unabhängigen Patentanspruchs gelöst. Vorteilhafte Weiterbildungen der vorliegenden Erfindung sind Gegenstand der Unteransprüche.

Die vorliegende Erfindung basiert auf der Idee, dass die aufgrund der Primärschwingung und der Modematching-Regelspannungen betragsmäßig nicht konstante Rückkoppelkraft digital nachgebildet wird, um die oben beschriebenen Störeffekte zu minimieren.

Typischerweise wird bei den in Drehratensensoren verwendeten Single-Bit-$\Delta\Sigma$M davon ausgegangen, dass die Rückkopplung aufgrund der Verwendung von lediglich zwei Pegeln zur Erzeugung der Rückstellkräfte einen perfekt linearen Betrieb ermöglicht. Üblicherweise wird der Betrag der Rückstellung darüber hinaus als zeitlich konstant angesehen oder es wird, wie oben dargestellt, versucht, die Rückstellung möglichst konstant zu halten. Im Gegensatz dazu ist bei Multi-Bit-$\Delta\Sigma$M bekannt, dass die verwendeten DAC zur Generierung der Rückstellung Nichtlinearitäten aufweisen können. Als eine mögliche Korrekturmaßnahme wird in der Monographie R. Schreier, G. Temes: "Understanding Delta-Sigma Data Converters", Wiley, New York, 2005, S. 200, eine Möglichkeit dargestellt, bei der für jeden Eingangscode des DAC die tatsächlich ausgegebenen Werte im Rahmen einer Kalibrierung gemessen und gespeichert werden.

Die gespeicherten Messwerte können während des Betriebs des $\Delta\Sigma$M verwendet werden, um den jeweils ausgegebenen DAC-Ausgangswert im digitalen Teil des Systems genauer abbilden zu können.

Aufbauend auf dieser digitalen Korrektur kann die aufgrund der Primärschwingung und Modematching-Regelspannungen betragsmäßig nicht konstante Rückkoppelkraft digital nachgebildet werden, um die obigen Störeffekte zu minimieren.

Im Gegensatz zu der aus R. Schreier, G. Temes: "Understanding Delta-Sigma Data Converters", Wiley, New York, 2005, bekannten Lösung bei Multi-Bit $\Delta\Sigma$M ist es jedoch nicht zielführend, jedem der Eingangscodes des (Single-Bit-)DAC einen konstanten Korrekturwert zuzuordnen. Daher wird erfindungsgemäß für jeden Abtastwert anhand der in diesem Moment vorliegenden Situation für Primäramplitude und Modematching-Steuersignal ein neuer Korrekturwert berechnet, welcher der mittleren Kraftwirkung während dieses Abtastwertes entspricht. Einem jeden Abtastwert des Bitstroms werden dann für die weiteren bei diesem Ausleseverfahren generell notwendigen Schritte (Demodulation, Filterung, Downsampling) nicht die für Single-Bit-$\Delta\Sigma$M üblichen Wertigkeit 1 bzw. -1 zugeordnet, sondern eine berechnete mittlere Kraftwirkung.

Obwohl nachfolgend stets nur eine primäre und eine sekundäre Masse beschrieben sind, ist für einen Fachmann klar, dass selbstverständlich auch mehr als nur jeweils eine Masse vorgesehen sein kann. Beispielsweise können zwei gegenläufig schwingende Primärmassen und entsprechend auch zwei Sekundärmassen vorgesehen sein. Die erfindungsgemäßen Konzepte lassen sich auch bei derartigen Anordnungen anwenden.

Zum besseren Verständnis der vorliegenden Erfindung wird diese anhand der in den nachfolgenden Figuren dargestellten Ausführungsbeispiele näher erläutert. Dabei werden gleiche Teile mit gleichen Bezugszeichen und gleichen Bauteilbezeichnungen versehen. Weiterhin können auch einzelne Merkmale oder Merkmalskombinationen aus den gezeigten und beschriebenen Ausführungsformen für sich genommen eigenständige erfinderische oder erfindungsgemäße Lösungen darstellen.

Es zeigen:

**Fig. 1**   eine schematische Prinzipdarstellung eines elektromechanischen Delta-Sigma-Modulators;

**Fig. 2**   eine schematische Darstellung der Anordnung von Rückkoppelelektroden an der Sekundärmasse eines kapazitiven Beschleunigungssensors;

**Fig. 3**   den zeitlichen Verlauf der Rückstellkraft für die Anordnung der Figur 1 bei ausgeschalteter Primärschwingung;

**Fig. 4**   den zeitlichen Verlauf der Rückstellkraft für die Anordnung der Figur 1 unter Einfluss der Primärschwingung;

**Fig. 5**   ein Spektrum des Delta-Sigma-Bitstroms der Anordnung aus Figur 1 bei ausgeschalteter Primärschwingung;

**Fig. 6**   ein Spektrum des Delta-Sigma-Bitstroms der Anordnung aus Figur 1 bei nominaler Primärschwingung;

**Fig. 7**   das Rauschen im Signalband (IBN) in Abhängigkeit von der Primärschwingungsamplitude für die Anordnung der Figur 1;

**Fig. 8**   eine Prinzipdarstellung einer bekannten Korrekturschaltung;

**Fig. 9**   eine schematische Prinzipdarstellung eines weiteren elektromechanischen DeltaSigma-Modulators mit Quadraturregelung und Regelung der sekundären Resonanzfrequenz;

**Fig. 10**   ein beispielhaftes Spektrum des Steuersignals für die Frequenzregelung in der Anordnung aus Figur 9;

**Fig. 11**   das Rauschen im Signalband (IBN) für den kalibrierten und den geregelten Bitstrom aus der Anordnung der Figur 9 bei verschiedenen Drehraten;

**Fig. 12**   den Signalrauschabstand (SNR) für den kalibrierten und den geregelten Bitstrom aus der Anordnung der Figur 9 bei verschiedenen Drehraten;

**Fig. 13**   das Spektrum des Delta-Sigma-Bitstroms der Anordnung aus Figur 9 bei ausgeschalteter Frequenzregelung;

**Fig. 14**   das Spektrum des Delta-Sigma-Bitstroms der Anordnung aus Figur 9 bei eingeschalteter Frequenzregelung;

**Fig. 15**   den zeitlichen Verlauf von eingespeisten Testsignalen zur Detektion der Sekundärresonanzfrequenz in der Anordnung der Figur 9;

**Fig. 16**   eine Prinzipdarstellung der digitalen Korrektur gemäß einer ersten vorteilhaften Ausführungsform der vorliegenden Erfindung;

**Fig. 17**   den zeitlichen Verlauf der Rückstellkraft unter Anwendung der digitalen Korrektur gemäß Figur 16;

**Fig. 18**   das Spektrum des digital korrigierten Bitstroms für die Anordnung der Figur 16;

**Fig. 19**   das Rauschen im Signalband (IBN) für den unkorrigierten und den korrigierten Bitstrom in Abhängigkeit von der Primärschwingungsamplitude;

**Fig. 20**   die verwendeten Korrekturamplituden in Abhängigkeit von der Primärschwingungsamplitude;

**Fig. 21**   eine Prinzipdarstellung der digitalen Korrektur gemäß einer weiteren vorteilhaften Ausführungsform der vorliegenden Erfindung;

**Fig. 22**   eine Prinzipdarstellung der digitalen Korrektur gemäß einer weiteren vorteilhaften Ausführungsform der vorliegenden Erfindung;

**Fig. 23**   das Spektrum des unkorrigierten Bitstroms für die Anordnung der Figur 22 bei hoher Drehrate;

**Fig. 24**   das Spektrum des korrigierten Bitstroms für die Anordnung der Figur 22 bei hoher Drehrate;

**Fig. 25** das Rauschen im Signalband (IBN) für den kalibrierten, den unkorrigierten und den korrigierten Bitstrom in Abhängigkeit von der Drehrate;

**Fig. 26** den Signalrauschabstand (SNR) für den kalibrierten, den unkorrigierten und den korrigierten Bitstrom in Abhängigkeit von der Drehrate.

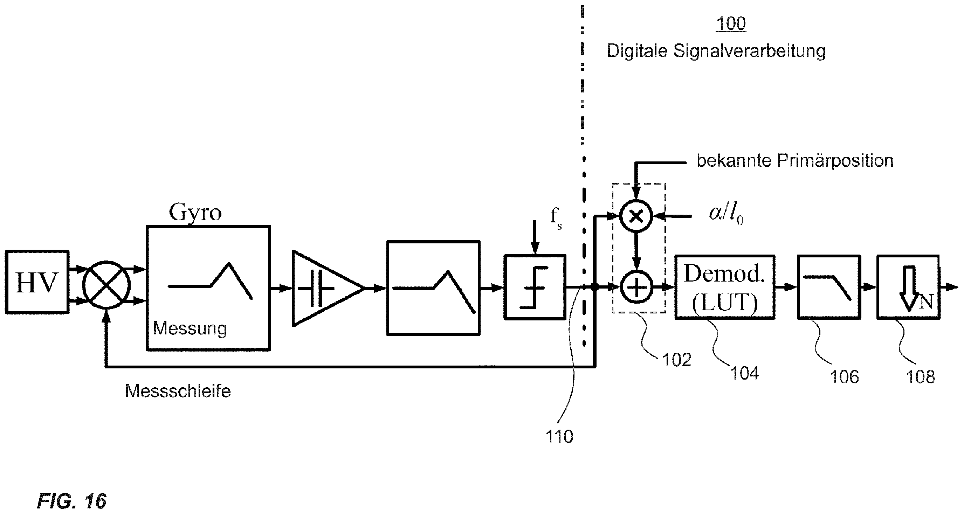

Mit Bezug auf die Figur 16 wird eine erste vorteilhafte Ausführungsform der vorliegenden Erfindung nachfolgend näher erläutert.

Erfindungsgemäß wird zur Minimierung der auf die Primärschwingung zurückgehenden Effekte die aufgrund der Primärschwingung betragsmäßig zeitlich nicht konstante Rückkoppelkraft digital nachgebildet. Einem jeden Abtastwert des Bitstroms wird dann für die weiteren Schritte (Demodulation, Filterung, Downsampling) nicht der Wertigkeit 1 bzw. -1 zugeordnet, sondern ein digitaler Wert, welcher der mittleren Kraftwirkung für diesen Abtastwert entspricht. Ein beispielhafter Aufbau zur Realisierung einer solchen digitalen Korrektur ist in Figur 16 dargestellt.

Dabei entspricht die Anordnung des elektromagnetischen Delta-Sigma-Modulators (em$\Delta\Sigma$M) der Darstellung aus Figur 1. Zur Vereinfachung sind in Figur 16 nur die Messschleife und die digitale Signalverarbeitung 100 gezeigt.

Der Ausgangs-Bitstrom des em$\Delta\Sigma$M wird gemäß der vorliegenden Erfindung mit der aktuellen mittleren Kraftwirkung gewichtet. Danach erfolgt die weitere digitale Verarbeitung des korrigierten Bitstroms. Wie in Figur 16 gezeigt, umfasst die digitale Signalverarbeitung 100 gemäß der vorliegenden Erfindung eine digitale Korrektureinheit 102

Die weitere Verarbeitung der korrigierten Daten erfolgt mittels einer Lookup-Tabelle (LUT) für die Demodulation 104 sowie einer Filteranordnung mit einem Tiefpassfilter 106 und einem Dezimationsfilter 108.

Da die Primärschwingung üblicherweise sowohl in der Frequenz als auch in der Amplitude geregelt wird, kann von einer bekannten Primärschwingung und auch von einer bekannten aktuellen Primärposition ausgegangen werden. Alternativ kann die Primärschwingung an den Ausgängen der Ausleseschaltung (C/V-Konverter) der Primärschwingung gemessen werden. Diese bekannte Primärposition dient als Eingangssignal für die Korrektureinheit 102. Weiterhin wird basierend auf dem oben beschriebenen kapazitiven Abweichungsfaktor $\alpha$ ein Korrekturfaktor $\alpha/l_0$ berechnet und ebenfalls der digitalen Korrektureinheit 102 zugeführt. Damit berechnet die digitale Korrektureinheit 102 aus dem Ausgangs-Bitstrom 110 des em$\Delta\Sigma$M einen korrigierten Bitstrom gemäß der oben hergeleiteten Gleichung (6):

$$F_{ges,dr} \;=\; F_{ges} \cdot \left(1 + \alpha \cdot \frac{x_p}{l_0}\right) \tag{6}$$

Die mittlere Kraftwirkung $F_{mean}$ kann durch Integration der aktuellen Kraftwirkung gemäß Gleichung (6) über die verwendete Rückkoppelzeit bestimmt werden. Für den Fall, dass die Rückstellkräfte dauerhaft anliegen, gilt $t_s = 1/f_s$, wobei $f_s$ die Abtastfrequenz des em$\Delta\Sigma$M bedeutet. Es ergibt sich:

$$
\begin{aligned}
F_{mean} \;&=\; \frac{1}{t_s} \int_{t_N}^{t_N+t_s} F_{ges,dr}\, \mathrm{d}t \\
&=\; F_{ges} \cdot \left(1 + \frac{\alpha}{l_0 \cdot t_s} \int_{t_N}^{t_N+t_s} x_p\, \mathrm{d}t\right) \\
&=\; F_{ges} \cdot \left(1 + \frac{\alpha}{l_0 \cdot t_s} \int_{t_N}^{t_N+t_s} \hat{x}_p \cdot \cos\left(2\pi f_p \cdot t + \phi\right) \mathrm{d}t\right)
\end{aligned}
$$

Bei dem in Figur 16 gezeigten Aufbau werden die Takte für den em$\Delta\Sigma$M durch eine phasenverriegelte Regelschleife (phase locked loop, PLL) in dem Block "Frequenzregelung" der Figur 1 so erzeugt, dass gilt: $f_s = 8 \cdot f_p$. Weiterhin sind die Frequenzen $f_s$ und $f_p$ in Phase, so dass angenommen werden kann, dass $\varPhi = 0$.

Somit ergibt sich für die zur Korrektur benötigten Gewichtungswerte $G_N$ eines jeden Abtastwertes N:

$$F_{mean} = F_{ges} \cdot \left( 1 + \frac{\alpha}{l_0 \cdot t_s} \int_{t_N}^{t_N + t_s} \hat{x}_p \cdot \cos\left(2\pi f_s/8 \cdot t\right) dt \right)$$

$$= F_{ges} \cdot \left( 1 + \frac{\alpha \cdot \hat{x}_p}{l_0} \cos\left( \frac{2\pi t_N}{8 t_s} + \pi/8 \right) \right)$$

$$F_{mean,N} = F_{ges} \cdot \left( 1 + A_{ges} \cdot \cos\left(2\pi/8 \left(N + 0.5\right)\right) \right)$$

$$G_N = \frac{F_{mean,N}}{F_{ges}} = \left( 1 + A_{ges} \cdot \cos\left(2\pi/8 \left(N + 0.5\right)\right) \right) \tag{18}$$

Die zur Korrektur nötigen Gewichtungswerte $G_N$ eines jeden Abtastwerts $N$ lassen sich aufgrund der geregelten Primärschwingung vorab berechnen. Darüber hinaus werden aufgrund des vorliegenden Zusammenhangs zwischen Primär- und Abtastfrequenz lediglich 8 Korrekturwerte benötigt, die sich anschließend wiederholen. Im hier gezeigten Fall ergeben sich die Gewichtungswerte für die digitale Korrektur zu:

$$G_{1:8} = 1 + A_{ges} \cdot 0.924 \cdot \begin{bmatrix} 1 & 0.414 & -0.414 & -1 & -1 & -0.414 & 0.414 & 1 \end{bmatrix} \tag{19}$$

Der Gewichtungswert $A_{ges}$ ist hierbei nach Gleichung (18) abhängig von der Primäramplidute $\hat{x}_p$ und mit einem zusätzlichen konstanten Faktor multipliziert, um eine einfachere Realisierung der LUT zu ermöglichen.

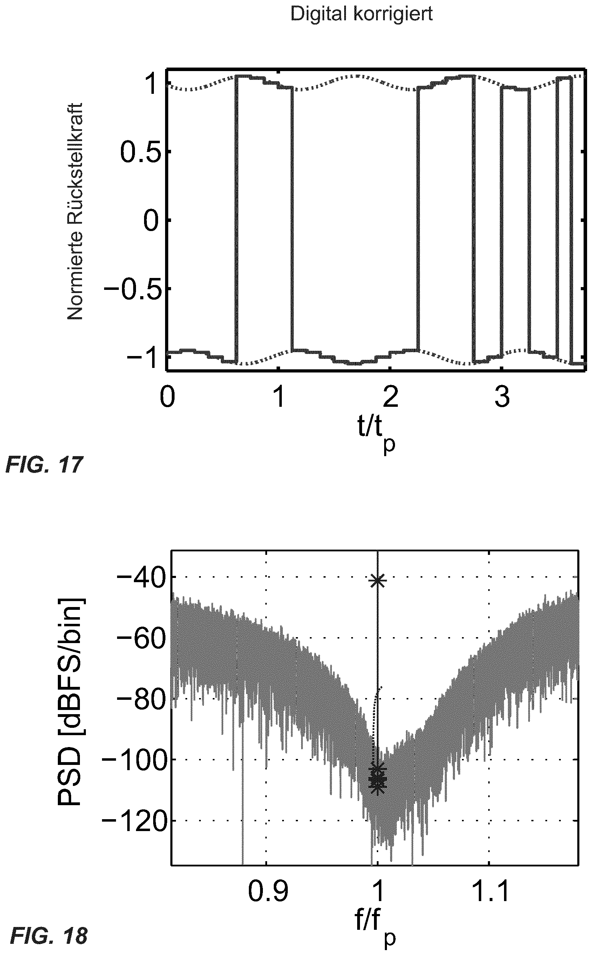

Da in der vorliegenden Ausführungsform ein Single-Bit-Quantisierer verwendet wird, ist eine Multiplikationsstufe für die Durchführung der Gewichtung nicht erforderlich. Lediglich das Vorzeichen der Gewichtungswerte wird abhängig vom Ausgangswert des Quantisierers angepasst. Figur 17 zeigt beispielhaft einen Ausschnitt des korrigierten Bitstroms zusammen mit der tatsächlichen Kraftwirkung. Figur 18 zeigt das zugehörige Spektrum des korrigierten Bitstroms. Wenn man diese Darstellung mit dem Spektrum aus Figur 6 vergleicht, wird deutlich, dass eine Verbesserung des Signalrauschabstandes um 12 dB erzielt werden kann. Dies entspricht einer verbesserten Auflösung von etwa 2 Bit.

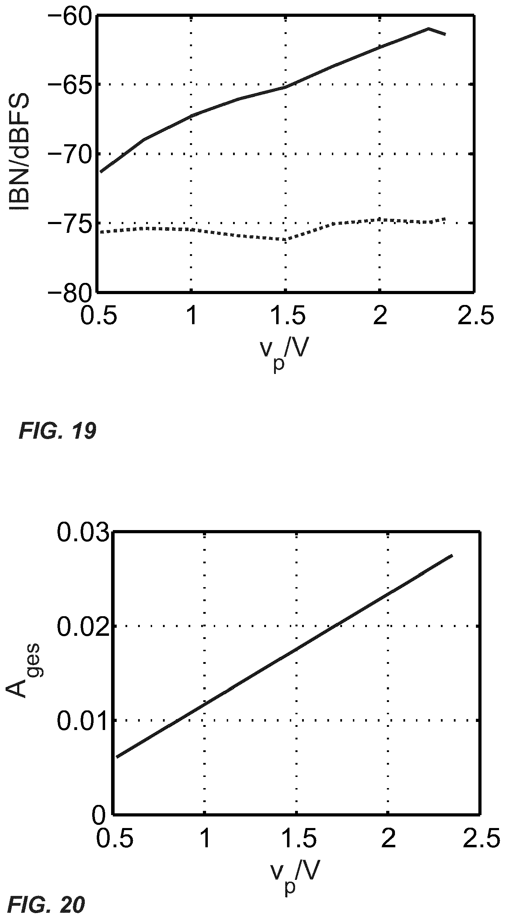

Die Figuren 19 und 20 zeigen das Rauschen im Signalband des korrigierten Bitstroms sowie die benötigten Korrekturamplituden $A_{ges}$ für die in Figur 7 gezeigten Primäramplituden. Ein linearer Zusammenhang zwischen der Primäramplitude $v_p$ und der verwendeten Korrekturamplitude $A_{ges}$ führt in dem hier vorliegenden Fall dazu, dass ein von der Primäramplitude nahezu unabhängiges Rauschen im Signalband erreicht werden kann. Dies ist in Figur 19 erkennbar. Dabei bezeichnet die durchgezogene Kurve den nicht korrigierten Bitstrom, während die strichlierte Kurve den korrigierten Bitstrom bezeichnet.

Zur weiteren Vereinfachung der digitalen Korrektur lassen sich die LUT der digitalen Korrektur und der Demodulation kombinieren, so dass sich beim vorliegenden Aufbau für Korrektur und Demodulation eine gemeinsame LUT ergibt mit den folgenden Werten:

$$G_{1:8,comb} = \begin{bmatrix} 0.414 & 1 & 1 & 0.414 & -0.414 & -1 & -1 & -0.414 \end{bmatrix} \cdot G_{1:8} \tag{20}$$

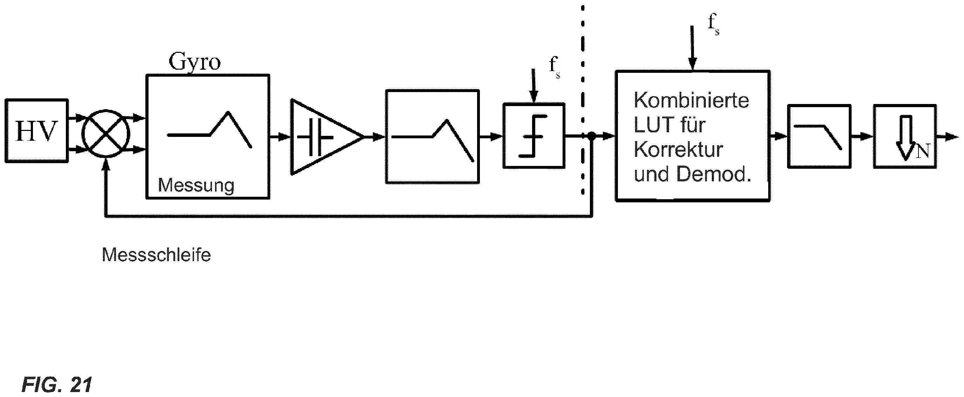

Aufgrund des verwendeten Zusammenhangs zwischen Primärfrequenz und Abtastfrequenz sowie der geregelten Primärschwingung können diese Werte im Idealfall ebenfalls vorab berechnet werden. Der vereinfachte Aufbau mit kombinierter LUT ist in Figur 21 dargestellt. Die digitale Korrektur kann hierdurch mit sehr geringem digitalen Mehraufwand durchgeführt werden.

Zur Minimierung der Störeffekte beim Matched-Mode-Betrieb wird gemäß einer vorteilhaften Weiterbildung der vorliegenden Erfindung jeder Abtastwert des Bitstroms in Abhängigkeit der Spannung $U_{Mode}$ so gewichtet, dass die aufgrund der Frequenzregelung veränderte Rückstellkraft digital nachgebildet wird. Einem Abtastwert des Bitstroms wird für die weiteren Schritte (Demodulation, Filterung, Downsampling) wiederum nicht die Wertigkeit 1 bzw. -1 zugeordnet, sondern ein digitaler Wert, welcher der mittleren Kraftwirkung für diesen Abtastwert entspricht.

Idealerweise wird dabei die Frequenzregelung so ausgeführt, dass eine Änderung der Spannung $U_{Mode}$ nur zu den Abtastzeitpunkten auftreten kann. Damit können sich die Auswirkungen nur zu den Abtastzeitpunkten ändern, was die Berechnung der Korrekturwerte vereinfacht.

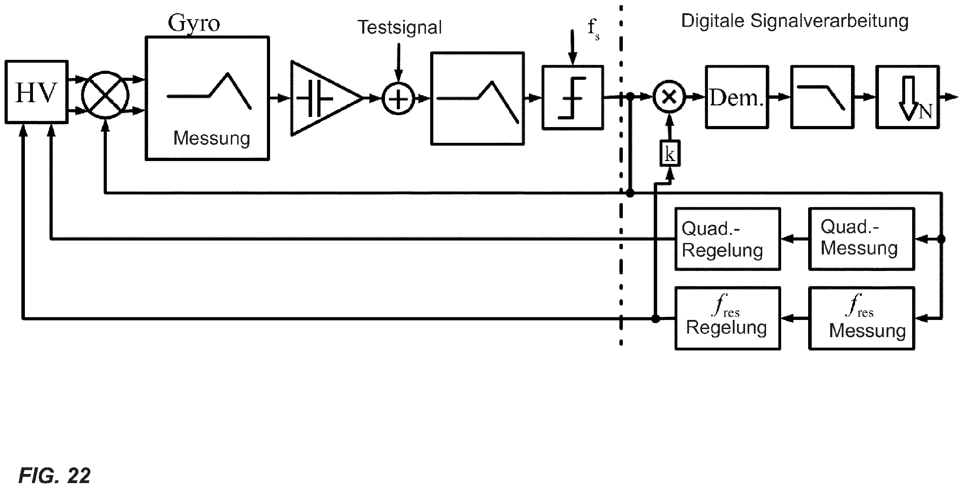

Figur 22 zeigt den prinzipiellen Aufbau mit einer digitalen Korrektur des Bitstroms im Falle einer Regelung der sekundären Resonanzfrequenz basierend auf der in Figur 9 gezeigten Anordnung. Der Bitstrom wird gemäß der vorliegenden Erfindung mit dem skalierten digitalen Ausgangswert der Frequenzregelung für jeden Abtastwert berechnet. Die Skalierung k wird hierbei so gewählt, dass für die Wertigkeit des Bitstroms nach der Korrektur die folgende Zuordnung gilt:

$$\pm 1 \rightarrow \pm \frac{U_{Mode}}{U_{FB}} \tag{21}$$

Durch diese Korrektur werden die entsprechend Gleichung (11) generierten Rückstellkräfte nachgebildet, wodurch sowohl die beschriebene Änderung des Skalenfaktors korrigiert wird als auch die Rauschfaltungseffekte minimiert werden.

Alternativ kann eine Struktur ähnlich zu der Anordnung aus Figur 16 verwendet werden, bei der nur die Abweichungen aufgrund der Frequenzregelung berechnet und addiert werden. Die Berechnung der Abweichungen lässt sich üblicherweise effizienter implementieren, wie dies in M. Sarhang-Nejad, G.C. Temes: "A high-resolution multibit ΣΔ ADC with digital correction and relaxed amplifier requirements", IEEE J. Solid-State Circuits, 28(6):648- 660, 1993, ausgeführt ist.

Als weitere Alternative kann die Korrektur auch im weiteren Verlauf der digitalen Signalverarbeitung erfolgen. Die bereits vor der Korrektur erfolgten Schritte der digitalen Signalverarbeitung müssen bei der Korrektur entsprechend berücksichtigt werden, um eine Korrektur der Rauschfaltungseffekte und des Skalenfaktors zu erreichen. Eine separate Verarbeitung der Abweichungen ist ebenfalls möglich.

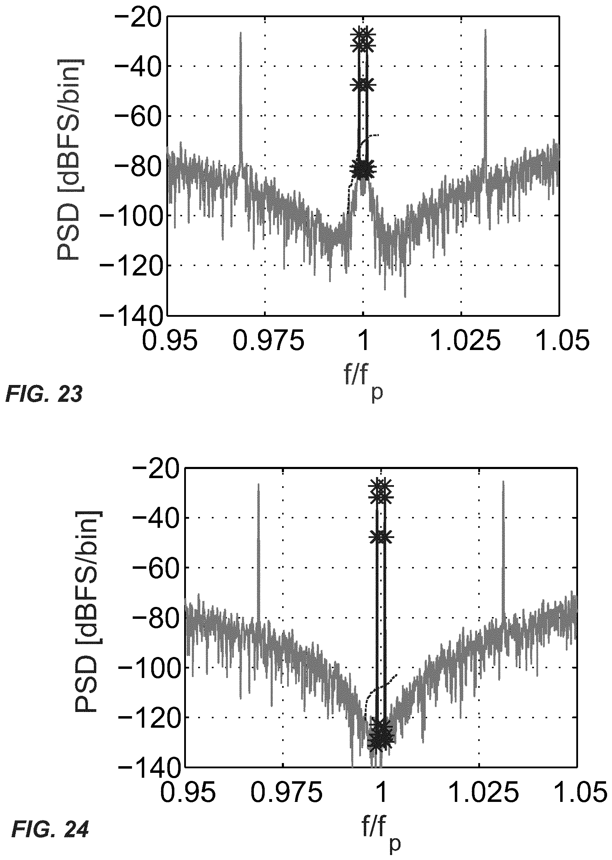

Die Figuren 23 und 24 stellen beispielhaft das Spektrum eines nicht korrigierten und eines so korrigierten Bitstroms einander gegenüber. Im Vergleich zum Spektrum des unkorrigierten Bitstrom ist eine deutliche Verbesserung des IBN erkennbar. Im Vergleich zum kalibrierten, ungeregelten System (Figur 13) zeigt sich, dass die Auswirkungen auf das Inband-Rauschen durch die Korrektur größtenteils kompensiert wurden.

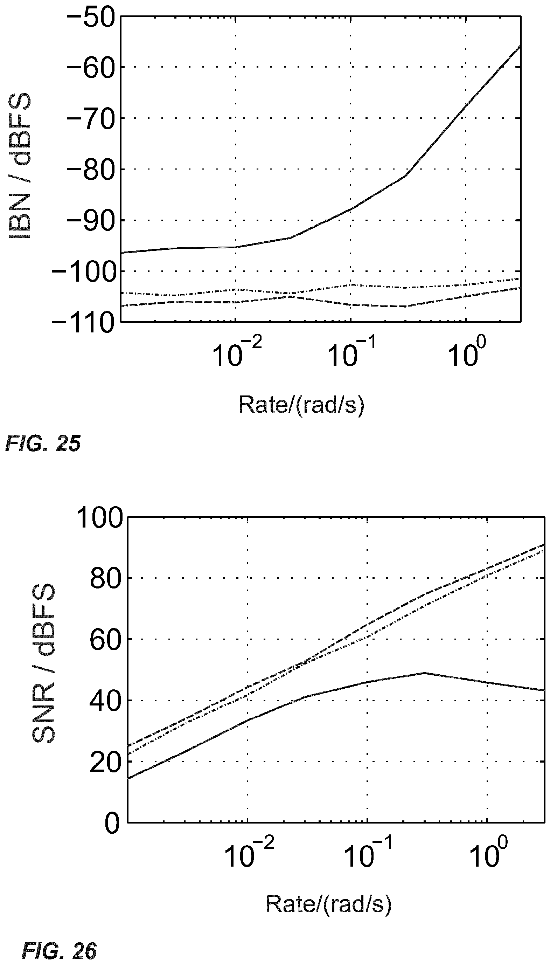

Die Figuren 25 und 26 zeigen das IBN sowie den Signalrauschabstand bei verschiedenen Drehraten mit und ohne Korrektur im Vergleich mit dem IBN bzw. SNR eines kalibrierten, ungeregelten Systems. Die durchgezogenen Kurven beziehen sich dabei jeweils auf den unkorrigierten Bitstrom, während die strichlierten Kurven sich auf den kalibrierten Bitstrom beziehen und die strichpunktierten Kurven das IBN bzw. SNR des erfindungsgemäß korrigierten Bitstroms zeigen. Es zeigt sich, dass sich durch die digitale Korrektur die Auswirkungen der mit Bezug auf Figur 9 beschriebenen Effekte kompensieren lassen. Die Korrektur ist hierbei nach der obigen Beziehung (21) unabhängig von der vorliegenden Drehrate.

Zusammenfassend werden gemäß der vorliegenden Erfindung die Pegel der Rückkopplung des Sigma-Delta Modulators nicht wie bisher üblich als zeitlich konstant angesehen, sondern es wird davon ausgegangen, dass eine zeitliche Veränderung dieser Pegel aufgrund von weiteren Einflüssen eintritt. Weiterhin werden keine analogen Maßnahmen ergriffen werden, um die Pegel der Rückkoppelkräfte konstant zu halten.

Die zeitlich veränderlichen Rückkoppelkräfte werden im Gegensatz zum Stand der Technik dadurch kompensiert, dass eine Gewichtung des jeweiligen Abtastwertes des Sigma-Delta Modulators entsprechend der tatsächlich wirkenden Rückkoppelkräfte in der digitalen Nachbereitung des Bitstroms vorgenommen wird. Dies führt dazu, dass die negativen Auswirkungen der zeitlich nicht konstanten Rückkoppelkräfte (z. B. erhöhtes Rauschen) beseitigt oder zumindest minimiert werden.

Daraus ergibt sich der Vorteil, dass keine Maßnahmen ergriffen werden müssen, um die Rückstellkräfte, insbesondere den Betrag der Rückstellkräfte, konstant zu halten. Dies führt dazu, dass speziell bei der Erzeugung der an den Sensor anzulegenden Spannungen keine zusätzlichen analogen Schaltungskomponenten notwendig sind.

Der negative Effekt der nicht konstanten Rückkoppelkräfte wird dadurch unterdrückt, dass die tatsächlich wirkenden Rückstellkräfte digital nachgebildet werden und diese digitale Nachbildung in der weiteren Signalverarbeitung verwendet wird. Des Weiteren lassen sich durch eine digitale Gewichtung auch komplexere zeitliche Veränderungen als die hier beobachteten durch Verwendung von entsprechend angepassten Gewichtungswerten oder entsprechenden Berechnungen unterdrücken.

Aufgrund der digitalen Implementierung bietet diese Lösung die Möglichkeit einer Energiesowie Flächeneinsparung im Vergleich zu einer Unterdrückung mittels analoger Schaltungen. Ein weiterer Vorteil der digitalen Implementierung liegt darin, dass eine Kalibrierung durch Setzen von digitalen Parametern sehr leicht möglich ist. Daher kann diese Lösung leicht an andere Sensoren oder andere Technologien angepasst werden, was bei einer analogen Implementierung nur bedingt der Fall ist.

Außerdem ist zu erwähnen, dass diese Technik bei einer Implementierung als anwendungsspezifische integrierte Schaltung (Application Specific Integrated Circuit, ASIC) vollständig von den Vorteilen der Technologieskalierung profitiert, da die dargestellte Lösung vollständig digital aufgebaut ist. Ein Wechsel der verwendeten Technologie wäre aufgrund der digitalen Implementierung darüber hinaus leichter möglich, da für digitale Teile des ASICs das Layout automatisch generiert werden kann.

Weiterhin können die zur Kompensation des Antriebseffektes nötigen Gewichtungswerte in die für die Demodulation der Drehrate benötigte LUT integriert werden, so dass nur sehr wenig zusätzliche digitale Hardware benötigt wird.

Somit ist eine Verbesserung des Systems durch geringen, rein digitalen Mehraufwand möglich, was zu einer Verbesserung der Systemparameter und zur Kostenreduktion im Vergleich zu anderen Lösungen beiträgt.

**Patentansprüche**

1. Schaltungsanordnung zum Auslesen eines kapazitiven Drehratensensors mit mindestens einer primären Masse und mindestens einer sekundären Masse, die mit der primären Masse verbunden ist, wobei die primäre Masse im Betrieb in einem ersten geschlossenen Regelkreis zu einer Primärschwingung anregbar ist und wobei die sekundäre Masse in einer Richtung quer zur Primärschwingung aus einer Ruhelage auslenkbar ist wenn der Drehratensensor um eine sensitive Achse, die quer zu der Richtung der Primärschwingung und zu der Richtung der Auslenkung der sekundären Masse verläuft, rotiert, wobei die Schaltungsanordnung aufweist: einen Delta-Sigma-Modulator mit mindestens einer Regelschleife zum Durchführen einer Kraftrückkopplung in einem zweiten geschlossenen Regelkreis zum Zurückstellen der sekundären Masse in ihre Ruhelage durch Anlegen eines Rückstellsignals, wobei das Rückstellsignal (110) ein Modulatorausgangssignal des Delta-Sigma-Modulators bildet, wobei die Schaltungsanordnung **gekennzeichnet ist durch** eine Korrektureinheit (102), die mit dem Modulatorausgangssignal beaufschlagbar ist und dazu ausgerichtet ist, ein korrigiertes Modulatorausgangssignal zu erzeugen, das einer tatsächlich wirkenden Rückstellkraft entspricht,

   einen Demodulator (104), der zum Demodulieren des korrigierten Modulatorausgangssignals mit der Korrektureinheit (102) verbunden ist,

   eine Filteranordnung (106, 108) zum Filtern des demodulierten Signals und zum Ausgeben eines Drehratensignals, wobei die Korrektureinheit (102) ein Multiplizierglied aufweist, welches dazu eingerichtet ist, dass es das Modulatorausgangssignal (110) mit einem bekannten Wert ($x_p$) der Position der primären Masse und einem Gewichtungsfaktor multipliziert, und

   wobei die Korrektureinheit (102) ein Addierglied aufweist, das dazu eingerichtet ist, dass es den Ausgang des Multipliziergliedes zu dem Modulatorausgangssignal addiert, um das korrigierte Modulatorausgangssignal zu erzeugen.

2. Schaltungsanordnung nach Anspruch 1, wobei der Demodulator (104) eine Lookup-Tabelle aufweist.

3. Schaltungsanordnung nach Anspruch 1, wobei die Korrektureinheit (102) und der Demodulator (104) durch eine kombinierte Lookup-Tabelle implementiert sind.

4. Schaltungsanordnung nach einem der Ansprüche 1 bis 3, wobei die Filteranordnung einen Tiefpassfilter (106) und einen Dezimationsfilter (108), die in Serie geschaltet sind, aufweist.

5. Schaltungsanordnung nach einem der Ansprüche 1 bis 4, weiterhin umfassend einen Regler zum Regeln einer sekundären Resonanzfrequenz, wobei die Korrektureinheit ein Multiplizierglied aufweist, das mit einem Ausgangssignal des Reglers verbunden ist.

6. Coriolisdrehratensensor mit mindestens einer primären Masse und mindestens einer sekundären Masse, die mit der primären Masse verbunden ist, wobei die primäre Masse im Betrieb zu einer Primärschwingung anregbar ist, und wobei die sekundäre Masse in einer Richtung quer zur Primärschwingung auslenkbar ist, wenn der Coriolisdrehratensensor um eine sensitive Achse rotiert,

   wobei der Coriolisdrehratensensor zum Auslesen eines Drehratensignals eine Schaltungsanordnung nach einem der vorhergehenden Ansprüche aufweist.

7. Verfahren zum Betreiben und Auslesen eines kapazitiven Drehratensensors mit mindestens einer primären Masse und mindestens einer sekundären Masse, die mit der primären Masse verbunden ist, wobei das Verfahren die folgenden Schritte aufweist:

   Anregen einer Primärschwingung der primären Masse in einem ersten geschlossenen Regelkreis, wobei die sekundäre Masse in einer Richtung quer zur Primärschwingung aus einer Ruhelage ausgelenkt wird, wenn der Drehratensensor um eine sensitive Achse, die quer zu der Richtung der Primärschwingung und zu der Richtung der Auslenkung der sekundären Masse verläuft, rotiert;
   Durchführen einer Kraftrückkopplung, welche die sekundäre Masse durch Anlegen eines Rückstellsignals (110) in ihre Ruhelage zurückstellt, wobei das Rückstellsignal (110) ein Modulatorausgangssignal eines Delta-Sigma-Modulators bildet und in einem zweiten geschlossenen Regelkreis erzeugt wird, wobei das Verfahren **dadurch gekennzeichnet ist, dass** das Modulatorausgangssignal (110) digital korrigiert wird, um eine tatsächlich auf die sekundäre Masse wirkende Rückstellkraft nachzubilden,
   wobei zur digitalen Korrektur das Modulatorausgangssignal (110) in einem Multiplizierglied mit einem bekannten Wert ($x_p$) der Position der primären Masse und einem Gewichtsfaktor multipliziert wird und das Ausgangssignal

des Multipliergliedes in einem Addierglied zu dem Modulatorausgangssignal (110) addiert wird, und wobei im Anschluss an die digitale Korrektur ein Demodulationsschritt zum Demodulieren des korrigierten Modulatorausgangssignals und ein Filterschritt zum Filtern des demodulierten Signals durchgeführt werden.

**8.** Verfahren nach Anspruch 7, wobei in dem Filterschritt eine Tiefpassfilterung und eine Dezimationsfilterung durchgeführt werden.

**9.** Verfahren nach einem der Ansprüche 7 bis 8, wobei weiterhin eine sekundäre Resonanzfrequenz mittels einer Frequenzregelung geregelt wird und in dem Schritt der digitalen Korrektur das Modulatorausgangssignal mit einem skalierten Ausgangswert der Frequenzregelung multipliziert wird.

**10.** Verfahren nach einem der Ansprüche 7 bis 9, wobei der Schritt der digitalen Korrektur für jeden von einer Vielzahl von Abtastwerten des Modulatorausgangssignals vorgenommen wird.

## Claims

**1.** Circuit arrangement to read out a capacitive vibratory gyroscope with at least one primary mass and at least one secondary mass that is connected to the primary mass, wherein in a first closed control loop the primary mass can be excited to a primary vibration during operation,
and wherein the secondary mass is deflectable from a resting position in a direction that is transversal to the primary vibration,
when the vibratory gyroscope rotates around a sensitive axis that is positioned transversally to the direction of the primary vibration and to the direction of deflection of the secondary mass, wherein the circuit arrangement has:

a delta-sigma modulator with at least one control loop to perform a force feedback in a second closed control loop, which resets the secondary mass to its resting position through application of a reset signal, wherein the reset signal (110) forms a modulator output signal of the delta-sigma modulator,
wherein the circuit arrangement is **characterized by** a correction unit (102) that can be supplied with the modulator output signal, and is operable to generate a corrected modulator output signal that corresponds to an actually impacting reset force,
a demodulator (104) that is connected to the correction unit (102) for demodulating the corrected modulator output signal, a filter arrangement (106, 108) to filter the demodulated signal and to output a rotary rate signal, wherein the correction unit (102) comprises a multiplying element that is configured in a way as to multiply the modulator output signal (110) with a known value ($x_p$) of the position of the primary mass and a weighting factor, and
wherein the correction unit (102) has an adding part that is configured to add the output of the multiplying element to the modulator output signal, in order to generate the corrected modulator output signal.

**2.** Circuit arrangement according to Claim 1, wherein the demodulator (104) comprises a look-up table.

**3.** Circuit arrangement according to one of the Claims 1 to 2, wherein the correction unit (102) and the demodulator (104) are implemented by a combined lookup table.

**4.** Circuit arrangement according to one of the Claims 1 to 3, wherein the filter arrangement has a low-pass filter (106) and a decimation filter (108) that are connected in series.

**5.** Circuit arrangement according to one of the Claims 1 to 4, further comprising a controller to control a secondary resonance frequency, wherein the correction unit has a multiplying element that is connected to an output signal of the controller.

**6.** Coriolis vibratory gyroscope with at least one primary mass and at least one secondary mass that is connected to the primary mass, wherein the primary mass is excitable to a primary vibration during operation, and wherein the secondary mass is deflectable in a direction that is transversal to the primary vibration when the Coriolis vibratory gyroscope rotates around a sensitive axis,
wherein the Coriolis vibratory gyroscope for reading out a rotary rate signal has a circuit arrangement according to one of the preceding claims.

7. Method for operating and reading out a capacitive vibratory gyroscope with at least one primary mass and at least one secondary mass that is connected to the primary mass, wherein the method includes the following steps:

exciting a primary vibration of the primary mass in a first closed control loop, wherein the secondary mass is deflected out of its resting position in a direction transversal to the primary vibration, when the rotary rate sensor rotates around a sensitive axis, which is positioned transversal to the direction of the direction of the primary vibration and to the direction of the deflection of the secondary mass,

performing a force feedback, which via applying a reset force (110) puts the secondary mass back to its resting position, wherein the reset force (110) is generated in a second closed control loop, wherein the reset force (110) forms a modulator output signal of a delta-sigma modulator and is generated in a second closed control loop, wherein the method is **characterized in that** the modulator output signal is corrected digitally, in order to reproduce a reset force that actually impacts on the secondary mass, wherein for the digital correction the modulator output signal (110) in a multiplying element is multiplied with a known value ($x_p$) of the position of the primary mass and a weight factor and the output signal of the multiplying element is added to the modulator output signal (110) in an adding element,

and wherein subsequently to the digital correction a demodulation step to demodulate the corrected modulation output signal and a filtering step to filter the demodulated signal are performed.

8. Method according to Claim 7, wherein a low-pass filtering and a decimation filtering process are performed in the filtering step.

9. Method according to one of the Claims 7 to 8, wherein further a secondary resonance frequency is controlled by means of a frequency control and wherein the feedback signal is multiplied with a scaled output value of the frequency control in the digital correction step.

10. Method according to one of the Claims 7 to 9, wherein the correction is performed for each of a plurality of sample values of the modulation output signal.

**Revendications**

1. Agencement de circuit destiné à la lecture d'un capteur de vitesse angulaire, capacitif, comprenant au moins une masse primaire et au moins une masse secondaire, qui est reliée à la masse primaire, agencement de circuit dans lequel la masse primaire peut, en fonctionnement, être soumise à une excitation selon une oscillation primaire dans un premier circuit de régulation fermé,

et dans lequel la masse secondaire peut être déviée d'une position de repos, dans une direction transversalement à l'oscillation primaire, lorsque le capteur de vitesse angulaire est en rotation autour d'un axe sensitif, qui s'étend transversalement à la direction de l'oscillation primaire et à la direction de la déviation de la masse secondaire, l'agencement de circuit comprenant :

un modulateur delta-sigma avec au moins une boucle de régulation pour l'exécution d'une rétroaction de force dans un deuxième circuit de régulation fermé, pour assurer le rappel de la masse secondaire dans sa position de repos, par l'application d'un signal de rappel, le signal de rappel (110) formant un signal de sortie de modulateur du modulateur delta-sigma,

l'agencement de circuit étant **caractérisé par** une unité de correction (102), qui peut être alimentée par le signal de sortie de modulateur, et qui est conçue pour produire un signal de sortie de modulateur corrigé, qui correspond à une force de rappel effectivement active,

un démodulateur (104) qui est relié à l'unité de correction (102), pour démoduler le signal de sortie de modulateur corrigé,

un agencement de filtre (106, 108) pour le filtrage du signal démodulé et pour délivrer un signal de vitesse angulaire,

l'unité de correction (102) comprenant un organe de multiplication, qui est conçu pour multiplier le signal de sortie de modulateur (110) par une valeur ($x_p$) connue de la position de la masse primaire et par un facteur de pondération, et

l'unité de correction (102) comprenant un organe d'addition, qui est conçu pour additionner la sortie de l'organe de multiplication au signal de sortie de modulateur, pour produire le signal de sortie de modulateur corrigé.

2. Agencement de circuit selon la revendication 1, dans lequel le démodulateur (104) comprend une table de correspondance.

3. Agencement de circuit selon la revendication 1, dans lequel l'unité de correction (102) et le démodulateur (104) sont implémentées par une table de correspondance combinée.

4. Agencement de circuit selon l'une des revendications 1 à 3, dans lequel l'agencement de filtre comprend un filtre passe-bas (106) et un filtre à décimation (108) montés en série.

5. Agencement de circuit selon l'une des revendications 1 à 4, comprenant, en outre, un régulateur pour réguler une fréquence de résonance secondaire, l'unité de correction comprenant un organe de multiplication, qui est relié à un signal de sortie du régulateur.

6. Capteur de vitesse angulaire de Coriolis comprenant au moins une masse primaire et au moins une masse secondaire, qui est reliée à la masse primaire, capteur
dans lequel la masse primaire peut, en fonctionnement, être soumise à une excitation selon une oscillation primaire, et dans lequel la masse secondaire peut être déviée dans une direction transversalement à l'oscillation primaire, lorsque le capteur de vitesse angulaire de Coriolis est en rotation autour d'un axe sensitif,
le capteur de vitesse angulaire de Coriolis comprenant un agencement de circuit selon l'une des revendications précédentes, pour assurer la lecture d'un signal de vitesse angulaire.

7. Procédé pour assurer le fonctionnement et la lecture d'un capteur de vitesse angulaire, capacitif, comprenant au moins une masse primaire et au moins une masse secondaire, qui est reliée à la masse primaire, le procédé comprenant les étapes suivantes :

excitation d'une oscillation primaire de la masse primaire dans un premier circuit de régulation fermé, la masse secondaire étant déviée d'une position de repos, dans une direction transversalement à l'oscillation primaire, lorsque le capteur de vitesse angulaire est en rotation autour d'un axe sensitif, qui s'étend transversalement à la direction de l'oscillation primaire et à la direction de la déviation de la masse secondaire ;
exécution d'une rétroaction de force, qui assure le rappel de la masse secondaire dans sa position de repos, par l'application d'un signal de rappel (110), le signal de rappel (110) formant un signal de sortie de modulateur d'un modulateur delta-sigma, et étant produit dans un deuxième circuit de régulation fermé,
le procédé étant **caractérisé**
**en ce que** le signal de sortie de modulateur (110) est corrigé numériquement, pour reproduire une force de rappel agissant effectivement sur la masse secondaire,
**en ce que** pour la correction numérique, le signal de sortie de modulateur (110) est multiplié dans un organe de multiplication, par une valeur ($x_p$) connue de la position de la masse primaire et par un facteur de pondération, et le signal de sortie de l'organe de multiplication est additionné, dans un organe d'addition, au signal de sortie de modulateur (110),
et **en ce qu'**à la suite de la correction numérique, sont effectuées une étape de démodulation pour démoduler le signal de sortie de modulateur corrigé, et une étape de filtrage pour filtrer le signal démodulé.

8. Procédé selon la revendication 7, d'après lequel dans l'étape de filtrage sont effectués un filtrage passe-bas et un filtrage à décimation.

9. Procédé selon l'une des revendications 7 à 8, d'après lequel, par ailleurs, une fréquence de résonance secondaire est régulée au moyen d'une régulation de fréquence, et lors de l'étape de la correction numérique, le signal de sortie de modulateur est multiplié par une valeur de sortie, à échelle adaptée, de la régulation de fréquence.

10. Procédé selon l'une des revendications 7 à 9, d'après lequel l'étape de la correction numérique est effectuée pour chacune d'un grand nombre de valeurs d'échantillonnage du signal de sortie de modulateur.

Antriebsschleife

HV

Antrieb

Frequenzregelung

Amplitudenregelung

Gyro

Digitale Signalverarbeitung

$f_s$

HV

Messung

Demod.

N

Messschleife

*FIG. 1*

EP 3 153 817 B1

TL                                      $l_0$        TR

Messung

Antrieb

BL              200                              BR

202

**FIG. 2**

ohne Antrieb

Normierte Rückstellkraft

t/t$_p$

**FIG. 3**

Nominalantrieb

Normierte Rückstellkraft

t/t$_p$

**FIG. 4**

FIG. 5

FIG. 6

FIG. 7

$V_{dis}$

Demodulator
Tiefpassfilter

Quantisierer-Ausgang

800

GND

$+V_{mod}$

$-V_{mod}$

GND

Sensor

GND

$V_{FB}$

$V_{dis}$

$K_L$

FIG. 8

FIG. 9

FIG. 10

FIG. 11

FIG. 12

FIG. 13

*FIG. 14*

*FIG. 15*

FIG. 16

Digital korrigiert

*FIG. 17*

*FIG. 18*

FIG. 19

FIG. 20

*FIG. 21*

FIG. 22

FIG. 23

FIG. 24

**FIG. 25**

**FIG. 26**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005046699 B4
- DE 102011005745 A1
- US 8847259 B2
- US 5440269 A
- DE 102010053022 A1

**In der Beschreibung aufgeführte Nicht-Patentliteratur**

- **T. NORTHEMANN ; M. MAURER ; S. ROMBACH, A. BUHMANN, Y. MANOLI.** Drive and sense interface for gyroscopes based on bandpass sigma-delta modulators. *Proc. IEEE Int. Circuits and Systems (IS-CAS) Symp,* 2010, 3264-3267
- **YUFENG DONG ; MICHAEL KRAFT ; WILLIAM REDMAN-WHITE.** Force feedback linearization for higher-order electromechanical sigma-delta modulators. *Journal of Micromechanics and Microengineering,* 2006, vol. 16 (6), 54
- **DRUCKSCHRIFT YUFENG DONG ; MICHAEL KRAFT ; WILLIAM REDMAN-WHITE.** Force feedback linearization for higher-order electromechanical sigma-delta modulators. *Journal of Micromechanics and Microengineering,* 2006, vol. 16 (6), 54
- **C. D. EZEKWE ; B. E. BOSERBOSER.** A Mode-Matching Closed-Loop Vibratory-Gyroscope Readout Interface with a 0.004°/s/√Hz Noise Floor over a 50Hz Band. *Proc. Digest of Technical Papers. IEEE International Solid-State Circuits Conference ISSCC 2008,* 58 ff
- **C. D. EZEKWE ; B. E. BOSER.** A Mode-Matching Closed-Loop Vibratory-Gyroscope Readout Interface with a 0.004°/s/√Hz Noise Floor over a 50Hz Band. *Proc. Digest of Technical Papers. IEEE International Solid-State Circuits Conference ISSCC,* 2008, 58 ff
- **R. SCHREIER ; G. TEMES.** Understanding Delta-Sigma Data Converters. Wiley, 2005, 200
- **R. SCHREIER ; G. TEMES.** Understanding Delta-Sigma Data Converters. Wiley, 2005
- **M. SARHANG-NEJAD ; G.C. TEMES.** A high-resolution multibit $\Sigma\Delta$ ADC with digital correction and relaxed amplifier requirements. *IEEE J. Solid-State Circuits,* 1993, vol. 28 (6), 648-660